# EUROPÄISCHE PATENTSCHRIFT

(11) **EP 1 714 764 B1**
(45) Veröffentlichungstag und Bekanntmachung des Hinweises auf die Patenterteilung: **09.12.2009**
(21) Anmeldenummer: 06111791.7
(22) Anmeldetag: 28.03.2006
(51) Int. Cl.: B29C 33/24, B29C 45/67, B30B 15/16, B29C 45/82

(54) **Hydraulische Formschliesseinheit**
Hydraulic mold closing unit
Unité de fermeture de moule hydraulique

(30) Priorität: 19.04.2005 DE 102005017878
(43) Veröffentlichungstag der Anmeldung: 25.10.2006
(73) Patentinhaber: KraussMaffei Technologies GmbH, 80997 München (DE)
(72) Erfinder: Reinhardt, Thomas, 85653, Aying (DE)
(74) Vertreter: Zollner, Richard

(56) Entgegenhaltungen:
- US-A- 4 235 088
- US-A- 5 395 565
- PATENT ABSTRACTS OF JAPAN Bd. 018, Nr. 258 (M-1606), 17. Mai 1994 (1994-05-17) & JP 06 039842 A (JAPAN STEEL WORKS LTD:THE), 15. Februar 1994 (1994-02-15)

## Beschreibung

Die Erfindung betrifft eine hydraulische Formschließeinheit gemäß dem Oberbegriff des Anspruchs 1.

In der JP 06039842 ist eine Vertikalschließeinrichtung der eingangs genannten Art beschrieben, bei der eine obere Formaufspannplatte mittels doppelwirkender Hydraulik-Kolben-Zylinder Antriebe bewegt und beaufschlagt wird. Zusätzlich sind Ausgleichszylinder vorgesehen, mit der die obere Platte hinsichtlich einer unteren Platte ausgerichtet werden kann.

Bei solchen bekannten vertikalen Formschließeinheiten wird ein Hydrauliköl beim Betrieb der Schließeinheit bzw. Presse zwischen den Hydraulikzylindern und dem Druckspeicher bzw. den Hydraulikzylindern und dem Pumpensystem mit einem bestimmten Druckniveau gefördert. Bei geöffneter Formschließeinheit wird ein Teil der Gewichtskraft der bewegten Masse von den Zylinderkolben der Hydraulikzylinder zweiter Art aufgenommen, die mit dem Druckspeicher verbunden sind. Der andere Teil der Gewichtskraft wird von den aus dem Pumpensystem betrieben Hydraulikzylinder erster Art gehalten.

Zum Schließen der Form muss gegen diese Drücke gearbeitet werden. Im Hydraulikzylinder zweiter Art, der mit dem Speicher verbunden ist, wirkt ein Speicherdruck nur im unteren Druckraum auf die Flüssigkeit. Dieser aus dem Druckspeicher resultierende Druck ist vorgegeben und in der Regel nicht beeinflussbar.

Der aus dem Pumpensystem zum Aufhalten der Formschließeinheit zur Verfügung gestellte Druck wurde bislang üblicherweise über ein Druckvorspannventil vorgegeben. Dieses Druckvorspannventil besteht meist aus einem handeinstellbarem Druckbegrenzungsventil, welches den Staudruck, der auf den doppelwirkenden Kolben einwirkt, vorgibt. Als Staudruck wird dabei der Druck bezeichnet, der im unteren Druckraum des doppelwirkenden Hydraulikzylinders, der mit dem Pumpensystem verbunden ist, entsteht.

Bei der genannten Ventilbauart des Druckvorspannventils kann nur ein fester Wert eingestellt werden. Dieser Wert muss hoch genug gewählt werden, um den Gewichtsdruck der Formaufspannplatte auch bei vollständig geöffneter Form sicher zu halten.

Ein Arbeitsdruck, der im oberen Druckraum des Hydraulikzylinders erster Art aufgebaut wird, muss zum Schließen so groß gewählt werden, dass sowohl der Staudruck wie auch der Druck im Hydraulikzylinder zweiter Art überwunden wird. Da bei dieser Konstruktion ein recht hoher Arbeitsdruck zum Schließen der Formschließeinheit erzeugt werden muss, bedingt dies eine hohe Leistungsaufnahme des hydraulischen Systems, was wiederum zu einem hohen Energieverbrauch führt. Überdies sind die Hydraulikkomponenten, wie Leitungen, Dichtungen, Pumpe, Motor etc. für diesen hohen Druck entsprechend auszulegen.

In der US 4,235,088 ist eine Presse mit einem Regelkreis beschrieben, wobei in einer Ausführungsform eine Kolbenplatte von einem Haupthydraulikantrieb gegen eine untere Platte gedrückt wird. Zusätzlich kann ein Einsatzteil mittels einer Halteplatte festgesetzt werden, wobei die Halteplatte über Kolben-Zylinder Anordnungen an die untere Platte gedrückt wird und die Kolben-Zylinder Anordnungen über einen Druck-Akkumulator beaufschlagt werden.

Aus der US 5,395,565 ist ein Verfahren zur Erfassung der Qualität eines mittels eines Prägeprozesses hergestellten Werkstückes bekannt. Bei der Vorrichtung zur Durchführung des Verfahrens werden verschiedene Hydraulikantriebe, wie ein Hauptzylinder, ein doppelseitig wirkender Hilfszylinder sowie Ausgleichszylinder verwendet. Die Zylinder werden allesamt über Antriebseinheiten mit Hydraulikpumpen angetrieben.

Die Aufgabe der Erfindung besteht darin, eine Konstruktion für eine vertikale Formschließeinheit anzugeben, die energiesparend arbeitet und konstruktionstechnisch für geringere Druckbelastungen ausgelegt werden kann.

Gelöst wird diese Aufgabe erfindungsgemäß durch die in Anspruch 1 genannten Merkmale.

Durch die erfindungsgemäße Lösung kann insbesondere der Staudruck eingestellt werden, wodurch sich insgesamt die Energieaufnahme reduzieren lässt. Ein weiterer Vorteil dieser Lösung ist, dass der benötigte Arbeitsdruck zumindest zeitweise reduziert werden kann und es beispielsweise möglich wird, schwächere Hydraulik-Komponenten (z.B. Pumpe, Leitungen etc.) zu verwenden. Überdies kann ein Nachjustieren beim Werkzeugwechsel entfallen, da sich das System automatisch an unterschiedliche Werkzeuggewichte und die daraus resultierenden Gewichtskräfte anpassen lässt.

Gemäß Anspruch 1 wird eine obere Formaufspannplatte von mindestens einem Hydraulikzylinder einer ersten Art mit einem doppelwirkenden Hydraulikkolben und mindestens einem Hydraulikzylinder einer zweiten Art vertikal bewegt. Der Hydraulikzylinder einer ersten Art ist mit einem Pumpensystem verbunden, in welchem ein Proportional- oder Regelventil derart vorgesehen und ausgebildet ist, dass beim Schließen der Staudruck veränderbar ist. Dieses Proportional- oder Regelventil wird vorzugsweise von einer Steuereinheit angesteuert, welche Drucksignale von Drucksensoren erhält. Die Drucksensoren ermitteln dabei mittelbar oder unmittelbar die Drücke in den Hydraulikzylindern erster Art und zweiter Art. Diese Drucksignale werden nach Aufnahme in der Steuereinheit verarbeitet. Beispielsweise kann die Differenz der beiden Drucksignale gebildet werden. Die Drucksignale, insbesondere die Differenz kann dann mit einem Soll-Druck, der beispielsweise in einer Tabelle in der Steuereinheit hinterlegt ist, verglichen werden. Aus diesem Vergleich resultierend kann ein Steuersignal ermittelt werden mit den das Proportional- oder Regelventil angesteuert wird.

Das Pumpensystem verfügt vorzugsweise über einen Motor und eine Pumpe, die ebenfalls regel- oder steuerbar ausgebildet sein können. In diesem Fall kann die Steuereinheit entsprechende Signale auch an das Pumpensystem ausgeben.

Gemäß einer bevorzugten Ausführungsform verfügt die Schließeinheit über zwei Hydraulikzylinder der ersten Art und zwei Hydraulikzylinder der zweiten Art, die diagonal zueinander angeordnet sind, um so einen möglichst synchronen und ruckfreien Lauf zu gewährleisten.

Um eine immer gleich bleibende Verfügbarkeit der Hydraulikflüssigkeit in dem speicherbetriebenen Hydraulikzylinder sicher zu stellen, bietet es sich an, einzelne Speichertanks des Hydraulikspeichers in Reihe zu schalten.

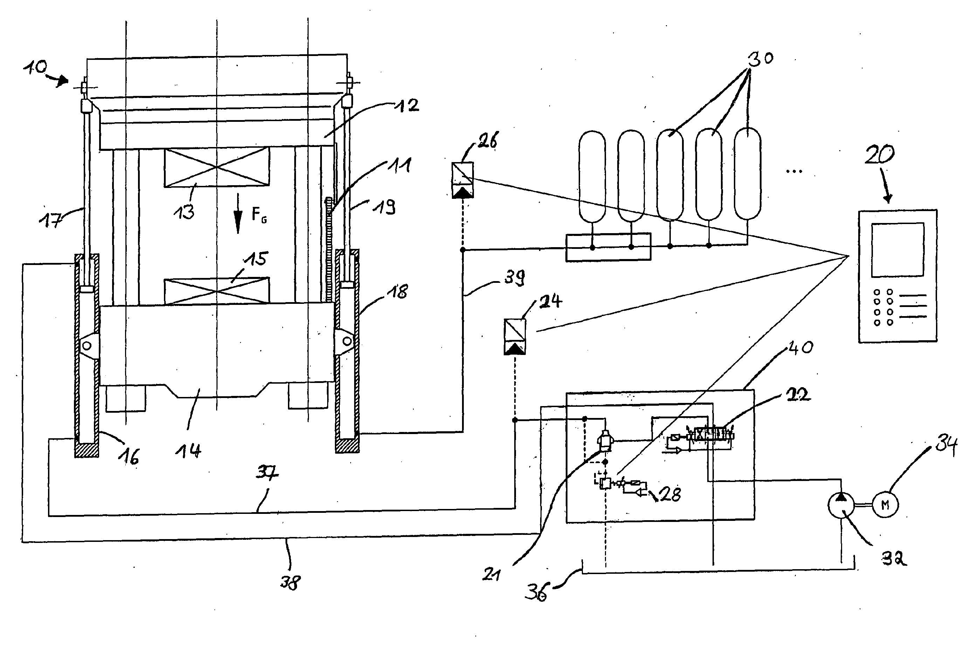

Die vorliegende Erfindung wird nachfolgend anhand eines Ausführungsbeispiels und mit Bezug auf die Zeichnung näher erläutert. Die einzige Zeichnung zeigt eine schematische Darstellung einer erfindungsgemäßen Formschließeinheit.

Die Formschließeinheit 10 weist eine feste untere Formaufspannplatte 14 auf, an welcher ein unteres Werkzeug 15 angeordnet ist. Als Gegenstück ist eine vertikal bewegliche, obere Formaufspannplatte 12 vorgesehen, an welcher ein oberes Werkzeug 13 angeordnet ist. Beim Schließen des Werkzeugs ergibt sich eine Kavität in der beispielsweise eine Kunststoffschmelze aus einer nicht näher dargestellten Plastifiziereinrichtung eingespritzt oder eine vorgefertigte Kunststoffmatte in die geöffnete Form per Hand oder Roboter eingelegt werden kann.

Die Vertikalbewegung dieser oberen Formaufspannplatte 12 wird durch vier diagonal zueinander angeordnete (in der Fig. sind nur zwei Hydraulikzylinder zu erkennen) Hydraulikzylinder 16, 18 bewirkt. In den Hydraulikzylindern 16 und 18 sind jeweils Hydraulikkolben 17 und 19 vorgesehen, welche mit der oberen Formaufspannplatte 12 verbunden sind. Dabei sind die Hydraulikkolben 17 als doppelwirkende Kolben mit einem oberen und einem unteren Druckraum im entsprechenden Hydraulikzylinder ausgebildet.

Die aktuelle Position der oberen Formaufspannplatte wird über einen Wegaufnehmer 11 registriert.

Die zwei Hydraulikzylinder erster Art 16 stehen über erste Hydraulikleitungen 37 und zweite Hydraulikleitungen 38 mit einem Hydraulikblock 40 des Pumpensystems in Verbindung. Dabei sind die oberen Druckräume der Hydraulikzylinder 16 über die ersten Hydraulikleitungen 37 und unter Zwischenschaltung eines Blockeinbauventils 21 mit einem Steuerventil 22 und letztlich mit der Pumpe 32 bzw. einem Vorratsbehälter 36 für das Hydrauliköl verbunden oder verbindbar. Ferner ist das Blockeinbauventil 21 mit einem Proportional- oder Regelventil 28 verbunden oder verbindbar, welches zur Druckreduzierung dient und wiederum mit dem Vorratsbehälter verbunden ist.

Die unteren Druckräume des Hydraulikzylinders 16 sind über die zweiten Hydraulikleitungen 38 unmittelbar mit dem Steuerventil 22 verbunden.

Zum Aufnehmen des Druckes in den zweiten Hydraulikleitungen 37 ist ein Drucksensor 24 vorgesehen, der an der oder den ersten Hydraulikleitungen 37 zwischen den Hydraulikzylindern 16 und dem Pumpensystem bzw. dem Hydraulikblock 40 angeordnet ist.

Der besagte Hydraulikblock 40 umfasst das Blockeinbauventil 21, das Steuerventil 22, und das Proportional- bzw. Regelventils 28. Außerhalb des Hydraulikblockes, aber zugehörig zum Pumpensystem sind eine Pumpe 32, einen Motor 34, der die Pumpe betreibt, und einen Vorratsbehälter 36 vorgesehen.

Das Blockeinbauventil 21, welches als Hauptsteuerventil arbeitet, wird über das Proportional- bzw. Regelventil 28, das als Vorsteuerventil dient und die Befehle von einer Steuereinheit 20 bekommt, geregelt bzw. gesteuert.

Die zwei Hydraulikzylinder zweiter Art 18 stehen über dritte Hydraulikleitungen 39 mit einem hydraulischen Druckspeicher 30 in Verbindung. Die einzelnen Tanks des Hydraulikspeichers 30 sind in Reihe geschaltet und untereinander verbunden.

Zum Aufnehmen der Drucksignale in diesem Druckkreis ist ein weiterer Drucksensor 26 vorgesehen, der an der oder den dritten Hydraulikleitungen 39 zwischen den Hydraulikzylindern 18 und dem Hydraulikspeicher 30 angeordnet ist.

Die Drucksignale von den Drucksensoren 24 und 26 werden in der Steuereinheit 20 verarbeitet und mit vorgegebenen Soll-Werten verglichen. Insbesondere wird die Druckdifferenz zwischen dem von den Drucksensoren 24 und 26 ermittelten Drücken ermittelt und auf Basis dieser Differenz ein Ansteuersignal für das Proportional- bzw. Regelventil ermittelt. Dieses Signal wird dann an die Ansteuerung 28 ausgegeben. Zudem kann auch der Motor 34 ansteuerbar ausgebildet sein und entsprechende Ansteuerbefehle von der Steuereinheit erhalten.

Insgesamt lässt sich mit der vorliegenden Erfindung der Staudruck im unteren Druckraum der ersten Hydraulikzylinder in einer Weise regeln, dass die Formschließeinheit zum einen sicher geöffnet und in der Offenposition gehalten und zum anderen ohne großen Energieaufwand auch geschlossen werden kann.

### Bezugszeichenliste:

- 10: vertikale Schließeinheit
- 11: Wegaufnehmer
- 12: obere, bewegliche Formaufspannplatte
- 13: Werkzeug oben
- 14: untere feste Formaufspannplatte
- 15: Werkzeug unten
- 16: Hydraulikzylinder erster Art
- 17: Hydraulikkolben des Hydraulikzylinders erster Art
- 18: Hydraulikzylinder zweiter Art
- 19: Hydraulikkolben des Hydraulikzylinders zweiter Art
- 20: Steuereinheit
- 21: Blockventil (Hauptsteuerstufe)
- 22: Steuerventil
- 24: erster Drucksensor
- 26: zweiter Drucksensor
- 28: Proportional- / Regelventil (Vorsteuerstufe)
- 30: Druckspeicher
- 32: Pumpe
- 34: Motor
- 36: Vorratsbehälter
- 37: erste Hydraulikleitung
- 38: zweite Hydraulikleitung
- 39: dritte Hydraulikleitung
- 40: Hydraulikblock

## Patentansprüche

1. Hydraulische Formschließeinheit, insbesondere für Spritzgießmaschinen oder Pressen, mit einer festen unteren Formaufspannplatte (14) und einer vertikal geführten, oberen Formaufspannplatte (12), die von mindestens zwei Hydraulikzylinder bewegt wird, von denen zumindest ein Hydraulikzylinder (16) einer ersten Art einen doppelwirkenden Kolben (17) aufweist, dessen beide Seiten mit einem hydraulischen Pumpensystem verbunden sind, und zumindest ein anderer Hydraulikzylinder (18) einer zweiten Art einen einfach wirkenden Kolben aufweist, dessen eine Seite mit einem Druckspeicher (30) verbunden ist, wobei bei geöffneter Formschließeinheit ein Teil der Gewichtskraft der bewegten Masse vom Zylinderkolben des Hydraulikzylinders zweiter Art aufgenommen und der andere Teil der Gewichtskraft von dem Hydraulikzylinder der ersten Art gehalten wird **dadurch gekennzeichnet, dass** im Pumpensystem ein Proportional- oder Regelventil (28) derart vorgesehen und betreibbar ist, dass beim Schließen ein Staudruck im Hydraulikzylinder (16) der ersten Art veränderbar, insbesondere steuer- oder regelbar ist.

2. Hydraulische Formschließeinheit nach Anspruch 1,
**dadurch gekennzeichnet,**
**dass** ein Drucksensor (24) vorgesehen ist, mit dem der Hydraulikdruck im mit dem Pumpensystem verbundenen Hydraulikzylinder (16) erster Art oder der Hydraulikdruck in der Zuführung zum Hydraulikzylinder (16) erster Art aufgenommen wird.

3. Hydraulische Formschließeinheit nach Anspruch 2,
**dadurch gekennzeichnet,**
**dass** ein zweiter Drucksensor (26) vorgesehen ist, mit dem der Hydraulikdruck im mit dem Hydraulikspeicher (30) verbundenen Hydraulikzylinder (18) zweiter Art oder in der Zuführung zum Hydraulikzylinder (18) zweiter Art aufgenommen wird.

4. Hydraulische Formschließeinheit nach einem der Ansprüche 1 bis 3,
**dadurch gekennzeichnet,**
**dass** eine Steuereinheit (20) vorgesehen ist, die zur Ansteuerung des Proportional- oder Regelventils dient.

5. Hydraulische Formschließeinheit nach Anspruch 4,
**dadurch gekennzeichnet,**
**dass** die Steuereinheit (20) zudem zur Aufnahme und Verarbeitung der Druck-signale der beiden Drucksensoren (24,26) vorgesehen ist.

6. Hydraulische Formschließeinheit nach einem der Ansprüche 1 bis 5,
**dadurch gekennzeichnet,**
**dass** das Pumpensystem eine Pumpe (32) und eine Antriebseinheit (34) für die Pumpe (32) aufweist, welche regel- oder steuerbar ausgebildet ist.

7. Hydraulische Formschließeinheit nach Anspruch 6,
**dadurch gekennzeichnet,**
**dass** die Kombination aus Pumpe (32) und Antriebseinheit (34) mit der Steuereinheit (20) verbunden ist, die Steuersignale an die Pumpe/Antriebseinheit ausgibt.

8. Hydraulische Formschließeinheit nach einem der Ansprüche 5 bis 7,
**dadurch gekennzeichnet,**
**dass** die Steuereinheit (20) die Drucksignale mit vorgegebenen Soll-Werten vergleicht.

9. Hydraulische Formschließeinheit nach Anspruch 8,
**dadurch gekennzeichnet,**
**dass** die Steuereinheit (20) zum Bilden einer Differenz der Drucksignale des ersten und zweiten Drucksensors ausgebildet ist und diese Differenz mit einem vorgegebenen Soll-Druck vergleicht.

10. Hydraulische Formschließeinheit nach Anspruch 8 oder 9,
**dadurch gekennzeichnet,**
**dass** die Steuereinheit (20) ausgebildet ist, um aufgrund des Vergleichs der Drucksignale mit vorgegebenen Sollwerten ein Ansteuersignal zu generieren, welches an das Pumpensystem ausgegeben wird.

11. Hydraulische Formschließeinheit nach einem der vorhergehenden Ansprüche 1 bis 10,
**dadurch gekennzeichnet,**
**dass** zwei Hydraulikzylinder der ersten Art (16) und zwei Hydraulikzylinder der zweiten Art (18) vorgesehen sind.

12. Hydraulische Formschließeinheit nach Anspruch 11,
**dadurch gekennzeichnet,**
**dass** die zwei Hydraulikzylinder der ersten Art (16) und die zwei Hydraulikzylinder der zweiten Art (18) diagonal zueinander angeordnet sind.

## Claims

1. A hydraulic mould closing unit, in particular for injection moulding machines or presses, with a fixed lower mould clamping plate (14) and a vertically guided upper mould clamping plate (12), which is moved by at least two hydraulic cylinders, of which at least one hydraulic cylinder (16) of a first type has a double-acting piston (17), the two sides of which are connected with a hydraulic pump system, and at least another hydraulic cylinder (18) of a second type has a single-acting piston, one side of which is connected with a pressure reservoir (30), wherein with the mould closing unit open, a portion of the weight force of the moved mass is taken up by the cylinder piston or the hydraulic cylinder of the second type, and the other portion of the weight force is held by the hydraulic cylinder of the first type,
**characterized in that**
in the pump system a proportional- or regulating valve (28) is provided and able to be operated such that on closing, a ram pressure in the hydraulic cylinder (16) of the first type is able to be altered, in particular is able to be controlled or regulated.

2. The hydraulic mould closing unit according to Claim 1,
**characterized in that**
a pressure sensor (24) is provided, by which the hydraulic pressure in the hydraulic cylinder (16) of the first type, connected with the pump system, or the hydraulic pressure in the feed to the hydraulic cylinder (16) of the first type is picked up.

3. The hydraulic mould closing unit according to Claim 2,
**characterized in that**
a second pressure sensor (26) is provided, by which the hydraulic pressure in the hydraulic cylinder (18) of the second type, connected with the hydraulic reservoir (30), or in the feed to the hydraulic cylinder (18) of the second type is picked up.

4. The hydraulic mould closing unit according to one of Claims 1 to 3,
**characterized in that**
a control unit (20) is provided, which serves to control the proportional or regulating valve.

5. The hydraulic mould closing unit according to Claim 4,
**characterized in that**
the control unit (20) is provided in addition to receive and process the pressure signals of the two pressure sensors (24, 26).

6. The hydraulic mould closing unit according to one of Claims 1 to 5,
**characterized in that**
the pump system has a pump (32) and a drive unit (34) for the pump (32), which is constructed so as to be able to be regulated and controlled.

7. The hydraulic mould closing unit according to Claim 6,
**characterized in that**
the combination of pump (32) and drive unit (34) is connected with the control unit (20), which emits control signals to the pump/drive unit.

8. The hydraulic mould closing unit according to one of Claims 5 to 7,
**characterized in that**
the control unit (20) compares the pressure signals with predetermined target values.

9. The hydraulic mould closing unit according to Claim 8,
**characterized in that**
the control unit (20) is constructed to form a difference of the pressure signals of the first and second pressure sensors and compares this difference with a predetermined target pressure.

10. The hydraulic mould closing unit according to Claim 8 or 9,
**characterized in that**
the control unit (20) is constructed in order to generate, on the basis of the comparison of the pressure signals with predetermined target values, a control signal which is emitted to the pump system.

11. The hydraulic mould closing unit according to one of the preceding Claims 1 to 10,
**characterized in that**
two hydraulic cylinders of the first type (16) and two hydraulic cylinders of the second type (18) are provided.

12. The hydraulic mould closing unit according to Claim 11,
**characterized in that**
the two hydraulic cylinders of the first type (16) and the two hydraulic cylinders of the second type (18) are arranged diagonally to each other.

## Revendications

1. Unité de fermeture de moule hydraulique, en particulier pour des machines de moulage par injection ou des presses, comprenant une plaque de serrage de moule inférieure fixe (14) et une plaque de serrage de moule supérieure (12) dirigée verticalement, déplacée par au moins deux vérins hydrauliques, desquels au moins un vérin hydraulique d'un premier type (16) présente un piston (17) à double action dont les deux côtés sont reliés à un système de pompe hydraulique, et au moins un autre vérin hydraulique d'un second type (18) présente un piston à simple action dont un côté est relié à un accumulateur de pression (30), sachant que lorsque l'unité de fermeture de moule hydraulique est ouverte, une partie de la force massique de la masse déplacée est absorbée par le piston de vérin du vérin hydraulique du second type et l'autre partie de la force massique du vérin hydraulique du premier type est maintenue, **caractérisée en ce que** dans le système de pompe, une vanne proportionnelle ou de régulation (28) est ainsi prévue et utilisable que lors de la fermeture, une pression d'accumulation dans le vérin hydraulique du premier type (16) puisse être modifiée, en particulier puisse être commandée ou régulée.

2. Unité de fermeture de moule hydraulique selon la revendication 1, **caractérisée en ce qu'**un capteur de pression (24) est prévu avec lequel la pression hydraulique dans le vérin hydraulique du premier type (16) relié au système de pompe ou la pression hydraulique dans l'arrivée du vérin hydraulique du premier type (16) est enregistrée.

3. Unité de fermeture de moule hydraulique selon la revendication 2, **caractérisée en ce qu'**un second capteur de pression (26) est prévu avec lequel la pression hydraulique dans le vérin hydraulique du second type (18) relié à l'accumulateur de pression (30) ou dans l'arrivée du vérin hydraulique du second type (18) est enregistrée.

4. Unité de fermeture de moule hydraulique selon l'une des revendications 1 à 3, **caractérisée en ce qu'**une unité de commande (20) est prévue qui sert à commander la vanne proportionnelle ou de régulation.

5. Unité de fermeture de moule hydraulique selon la revendication 4, **caractérisée en ce que** l'unité de commande (20) est prévue en plus pour enregistrer et traiter les signaux de pression des deux capteurs de pression (24, 26).

6. Unité de fermeture de moule hydraulique selon l'une des revendications 1 à 5, **caractérisée en ce que** le système de pompe présente une pompe (32) et une unité d'entraînement (34) de la pompe (32) qui peut être régulée ou commandée.

7. Unité de fermeture de moule hydraulique selon la revendication 6, **caractérisée en ce que** la combinaison de la pompe (32) et de l'unité d'entraînement (34) est reliée à l'unité de commande (20) qui émet des signaux de commande à la pompe/l'unité d'entraînement.

8. Unité de fermeture de moule hydraulique selon l'une des revendications 5 à 7, **caractérisée en ce que** l'unité de commande (20) compare les signaux de pression à des valeurs nominales prédéfinies.

9. Unité de fermeture de moule hydraulique selon la revendication 8, **caractérisée en ce que** l'unité de commande (20) est construite pour former une différence des signaux de pression des premier et second capteurs de pression et compare cette différence avec une pression nominale prédéfinie.

10. Unité de fermeture de moule hydraulique selon la revendication 8 ou 9, **caractérisée en ce que** l'unité de commande (20) est construite pour générer un signal de commande sur la base de la comparaison des signaux de pression à des valeurs nominales prédéfinies, lequel signal est transmis au système de pompe.

11. Unité de fermeture de moule hydraulique selon l'une des revendications 1 à 10, **caractérisée en ce que** deux vérins hydrauliques du premier type (16) et deux vérins hydrauliques du second type (18) sont prévus.

12. Unité de fermeture de moule hydraulique selon la revendication 11, **caractérisée en ce que** les deux vérins hydrauliques du premier type (16) et les deux vérins hydrauliques du second type (18) sont placés en diagonale l'un par rapport à l'autre.
